# EUROPÄISCHE PATENTSCHRIFT

(11) **EP 4 331 871 B1**
(45) Veröffentlichungstag und Bekanntmachung des Hinweises auf die Patenterteilung: **17.06.2026**
(21) Anmeldenummer: 23192581.9
(22) Anmeldetag: 22.08.2023
(51) Int. Cl.: B60C 23/04

(54) **VERFAHREN FÜR EINE ZUORDNUNG VON REIFENMODULEN ZU UNTERSCHIEDLICHEN REIFENPOSITIONEN AN EINEM FAHRZEUG**
METHOD FOR ASSIGNING TYRE MODULES TO DIFFERENT TYRE POSITIONS ON A VEHICLE
PROCÉDÉ D'ATTRIBUTION DE MODULES DE PNEU À DIFFÉRENTES POSITIONS DE PNEU SUR UN VÉHICULE

(30) Priorität: 30.08.2022 DE 102022208958
(43) Veröffentlichungstag der Anmeldung: 06.03.2024
(73) Patentinhaber: Continental Reifen Deutschland GmbH, 30175 Hannover (DE)
(72) Erfinder: James, Akhil, 30165 Hannover (DE); Sahlmüller, Baldo, 30165 Hannover (DE)
(74) Vertreter: Continental Corporation

(56) Entgegenhaltungen:
- EP-A1- 4 101 662
- EP-A2- 1 769 948
- CN-U- 212 313 197
- JP-A- 2012 126 341

## Beschreibung

Die Erfindung betrifft ein Verfahren für eine Zuordnung von Reifenmodulen zu unterschiedlichen Reifenpositionen an einem Fahrzeug.

Es ist bekannt, bei Fahrzeugreifen eine Reifendrucküberwachung einzusetzen, um einen Druckverlust sicher zu detektieren.

Ein Problem bei der Reifendrucküberwachung von Nutzfahrzeugen besteht darin, dass jeder Fahrzeugreifen mit einem Reifenmodul für eine Druckkontrolle versehen ist und jedes Reifenmodul einer Reifenposition am Fahrzeug zugeordnet werden muss.

Die EP 4 101 662 A1 betrifft ein System und ein Verfahren zur Bestimmung der Position eines Reifensensors auf dem Fahrgestell eines Fahrzeugs. Weiterer Stand der Technik ist in CN 212 313 197 U, JP 2012 126341 A und EP 1 769 948 A2 zu finden.

Der Erfindung lag die Aufgabe zugrunde, ein Verfahren bereitzustellen, mit dem auf einfache Weise und mit einer hohen Genauigkeit jedes Reifenmodul der richtigen Reifenposition am Fahrzeug zugeordnet werden kann.

Gelöst wird die Aufgabe durch ein Verfahren mit den folgenden Schritten:
a) Bereitstellen eines Fahrzeuges mit Fahrzeugreifen,
   wobei die Fahrzeugreifen einzelne Reifenmodule zur Reifendrucküberwachung und jeweils einen Transponder mit Fahrzeugreifen-Informationen sowie einem Fahrzeugreifen-Identifizierungskennzeichen aufweisen,
b) Bereitstellen von mindestes einer Empfangsvorrichtung zum Auslesen von Transpondern,
c) Vorbeifahrt des Fahrzeuges an der Empfangsvorrichtung,
   wobei nacheinander die Fahrzeugreifen-Identifizierungskennzeichen von den einzelnen Transpondern an den Fahrzeugreifen empfangen und auf einem Speicher abgelegt werden,
d) Zuordnen der einzelnen Fahrzeugreifen zu einzelnen Reifenmodul-Identifikationskennzeichen der unterschiedlichen Reifenmodule,
   wobei bei der Zuordnung die von den Transpondern ausgelesenen Fahrzeugreifen-Identifizierungskennzeichen genutzt werden,
e) Zuordnen der einzelnen Reifenmodule zu einer Reifenposition am Fahrzeug, wobei nachfolgend die Signale von einzelnen Reifenmodulen jeweils einer eindeutigen Reifenposition am Fahrzeug zugeordnet werden können,
   wobei zwei Empfangsvorrichtungen zum Auslesen von Transpondern bereit gestellt werden,
   wobei das Fahrzeug auf beiden Seiten jeweils an einem der Empfangsvorrichtungen vorbei fährt und dabei die einzelnen Transponder an den Fahrzeugreifen ausgelesen werden.

Ein Vorteil der Erfindung ist insbesondere darin zu sehen, dass durch das erfindungsgemäße Verfahren eine einfache und sichere Zuordnung der Reifenmodule zu den einzelnen Reifenpositionen am Fahrzeug erfolgt.

Mit dem neuen Verfahren lässt sich dadurch die Zuordnung der Reifenmodule zu den einzelnen Reifenpositionen einfach, automatisiert und mit einer hohen Geschwindigkeit durchführen.

**In** einer vorteilhaften Weiterbildung der Erfindung ist vorgesehen, dass auf einem zentralen Datenspeicher außerhalb des Fahrzeugs von einem Reifenhersteller Fahrzeugreifen-Informationen sowie Fahrzeugreifen-Identifizierungskennzeichen zu den einzelnen Fahrzeugreifen und Informationen zu den einzelnen Reifenmodulen gespeichert sind,
wobei bei der Zuordnung der Reifenmodule zu den einzelnen Reifenpositionen diese Informationen genutzt werden.

Der zentrale Datenspeicher ist jederzeit erreichbar, wobei die Daten auf einfache Weise z.B. von einem Flottenbetreiber abgerufen werden können. Dadurch kann eine schnelle und einfache Zuordnung der Reifenmodule zu den einzelnen Reifenpositionen erfolgen.

**In** einer weiteren vorteilhaften Weiterbildung der Erfindung ist vorgesehen, dass bei der Erstausrüstung oder Nachrüstung der Fahrzeugreifen mit Reifenmodulen das jeweilige Reifenmodul-Identifizierungskennzeichen einem Fahrzeugreifen-Identifizierungskennzeichen vom Transponder zugeordnet wird.

Auf diese Weise wird eine einfache und sichere Zuordnung des jeweiligen Reifenmodul-Identifizierungskennzeichen zu dem Identifizierungskennzeichen des Fahrzeugreifens gewährleistet.

**In** einer weiteren vorteilhaften Weiterbildung der Erfindung ist vorgesehen, dass am Fahrzeug ein Fahrzeug-Transponder angeordnet ist, wobei auf einem Speicher des Fahrzeug-Transponders unterschiedliche Informationen zu Reifenpositionen und Fahrzeugachsen des Fahrzeuges gespeichert sind,
wobei diese Informationen bei der Vorbeifahrt am Empfangsgerät ausgelesen und bei der Zuordnung der Reifenmodule zu den Reifenpositionen genutzt werden. Der Fahrzeug-Transponder umfasst unter anderem Informationen darüber, wie viele Reifenachsen das Fahrzeug besitzt. Außerdem kann der Transponder Informationen zur Anzahl der Reifenpositionen umfassen.

In einer weiteren vorteilhaften Weiterbildung der Erfindung ist vorgesehen, dass die ermittelten Reifenpositionen der einzelnen Reifenmodule automatisiert an eine Steuereinheit am Fahrzeug übertragen werden.

Diese Datenübertragung kann beispielsweise über eine Funkübertragung erfolgen.

In einer weiteren vorteilhaften Weiterbildung der Erfindung ist vorgesehen, dass die ermittelten Reifenpositionen der einzelnen Reifenmodule automatisiert auf ein Display für den Fahrer übertragen werden.

Dadurch erhält der Fahrer des Fahrzeuges auf einfache Weise Informationen darüber, ob an einem Fahrzeugreifen ein Minderdruck vorliegt.

Erfindungsgemäß ist vorgesehen, dass zwei Empfangsvorrichtungen zum Auslesen von Transpondern bereit gestellt werden,
wobei das Fahrzeug auf beiden Seiten jeweils an einem der Empfangsvorrichtungen vorbei fährt und dabei die einzelnen Transponder an den Fahrzeugreifen ausgelesen werden.

Dadurch werden die Transponder an den Fahrzeugreifen auf beiden Seiten des Fahrzeuges auf einfache Weise und schnell ausgelesen.

In einer weiteren vorteilhaften Weiterbildung der Erfindung ist vorgesehen, dass der Transponder einen RFID-Chip umfasst, der in einem Bauteil am Fahrzeugreifen eingebettet ist.

Transponder mit einem RFID-Chip lassen sich auf einfache Weise in Fahrzeugreifen integrieren.

In einer weiteren vorteilhaften Weiterbildung der Erfindung ist vorgesehen, dass das Verfahren zur Zuordnung der einzelnen Reifenmodule zu den Reifenpositionen bei jeder Vorbeifahrt des Fahrzeugs an der Empfangsvorrichtung durchgeführt wird.

Dadurch wird ein möglicher Wechsel von Reifen am Fahrzeug schnell erkannt und die Zuordnung wird korrigiert.

Anhand eines Ausführungsbeispiels wird die Erfindung im Folgenden näher beschrieben.

Es zeigt:

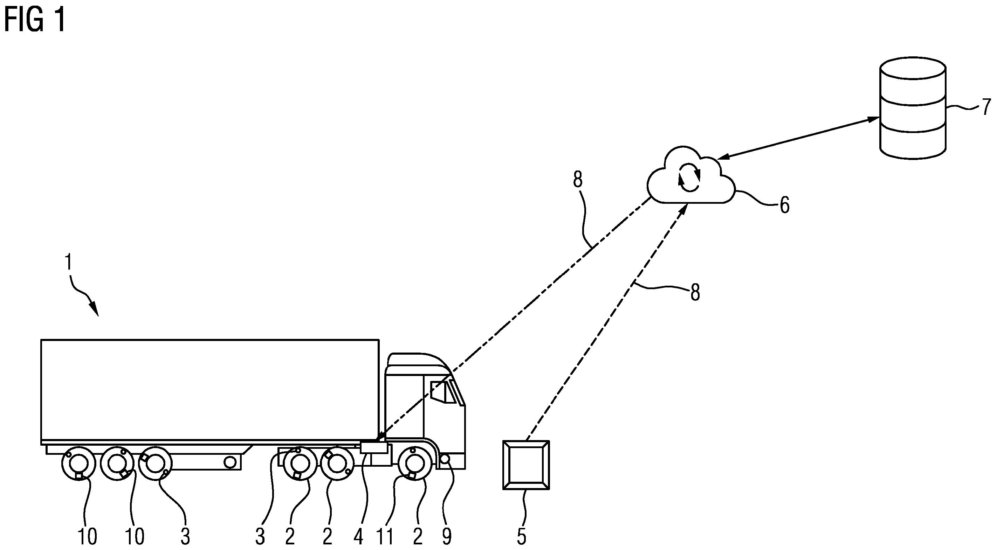

Fig. 1: Ein Nutzfahrzeug in der Seitenansicht.

Die Figur 1 zeigt ein Ausführungsbeispiel.

Das Fahrzeug 1 ist ein Nutzfahrzeug mit einer Zugmaschine und einem Anhänger. Das Fahrzeug 1 weist eine Vielzahl von Fahrzeugreifen 2 auf, die jeweils mit einem Reifenmodul 10 versehen sind. Die Reifenmodule sind bevorzugt auf der Reifeninnenseite befestigt und dienen u.a. dazu, den Reifendruck der Fahrzeugreifen zu überwachen. Außerdem weist jeder Fahrzeugreifen einen Transponder auf, der bevorzugt im Reifenwulst des Fahrzeugreifens eingebettet ist. Der Transponder 3 weist bevorzugt einen RFID-Chip auf, der eine Vielzahl von Informationen zum Fahrzeugreifen beinhaltet. Insbesondere sind auf dem Transponder ein individuelles Fahrzeugreifen-Identifizierungskennzeichen abgespeichert. Bei der Montage des Reifenmoduls 10 auf der Reifeninnenseite wird das individuelle Reifenmodul-Identifizierungskennzeichen dem jeweiligen individuellen Fahrzeug-Identifizierungskennzeichen des Fahrzeugreifens zugeordnet, z.B. dem Fahrzeugreifen 11, der später am Fahrzeug 1 an der Reifenposition "vorne rechts" montiert wird.

Die Daten zu den Identifizierungskennzeichen der Reifenmodule und der Fahrzeugreifen werden nach der Montage der Reifenmodule auf der Reifeninnenseite auf einem Datenspeicher 7 außerhalb des Fahrzeuges gespeichert. Das Fahrzeug 1 weist ebenfalls einen Transponder 9 auf, welches beispielsweise seitlich an der Zugmaschine angeordnet ist. Der Fahrzeug-Transponder 9 enthält u.a. Informationen zu der Anzahl der Fahrzeugachsen des Fahrzeuges. Das Fahrzeug 1 fährt mit einer langsamen Geschwindigkeit an der Transponder-Empfangsvorrichtung 5 vorbei. Bei der Vorbeifahrt werden alle Informationen aus den Transpondern 9 und 3 ausgelesen. Die Informationen der Transponder, die in den einzelnen Fahrzeugreifen angeordnet sind, werden in einer zeitlichen Abfolge nacheinander ausgelesen.

Aus dieser zeitlichen Abfolge und den Informationen, die auf dem Datenspeicher 7 abgelegt sind, lassen sich die einzelnen Reifenmodule bestimmten Reifenpositionen am Fahrzeug zuordnen, z.B. dem Fahrzeugreifen 11 mit der Reifenposition "vorne rechts". Die Auswertung der Daten erfolgt über eine Funkverbindung 8 mit einer Cloud 6 im Internet. Die Cloud 6 greift auf die Daten des Datenspeichers 7 zurück. Über eine Funkverbindung werden die ermittelten Reifenpositionen auf ein Steuergerät 4 am Fahrzeug 1 übertragen. Das Steuergerät 4 sorgt dafür, dass beispielsweise die entsprechenden Reifenpositionen der Reifenmodule auf einem Display im Fahrerhaus angezeigt werden. Die Zuordnung der einzelnen Reifenmodule zu den Reifenpositionen erfolgt mit der Empfangsvorrichtung 5 im Wesentlichen voll automatisch.

### Bezugszeichenliste

- 1: Fahrzeug
- 2: Fahrzeugreifen
- 3: Transponder (insb. RFID-Tag) an einzelnen Fahrzeugreifen und am Fahrzeug
- 4: Steuergerät am Fahrzeug
- 5: Transponder-Empfangsvorrichtung
- 6: Cloud
- 7: Datenspeicher
- 8: Kommunikation über Funkverbindung
- 9: Transponder am Fahrzeug
- 10: Reifenmodule
- 11: Fahrzeugreifen vorne rechts an Zugmaschine

## Patentansprüche

1. Verfahren für eine Zuordnung von Reifenmodulen zu unterschiedlichen Reifenpositionen an einem Fahrzeug (1) mit folgenden Schritten:
a) Bereitstellen eines Fahrzeuges (1) mit Fahrzeugreifen (2),
wobei die Fahrzeugreifen (2) einzelne Reifenmodule (10) zur Reifendrucküberwachung und jeweils einen Transponder (3) mit Fahrzeugreifen-Informationen sowie einem Fahrzeugreifen-Identifizierungskennzeichen aufweisen,
b) Bereitstellen von mindestes einer Empfangsvorrichtung (5) zum Auslesen von Transpondern (3),
c) Vorbeifahrt des Fahrzeuges (1) an der Empfangsvorrichtung (5),
wobei nacheinander die Fahrzeugreifen-Identifizierungskennzeichen von den einzelnen Transpondern (3) an den Fahrzeugreifen empfangen und auf einem Datenspeicher (7) abgelegt werden,
d) Zuordnen der einzelnen Fahrzeugreifen (2) zu einzelnen Reifenmodul-Identifikationskennzeichen der unterschiedlichen Reifenmodule (10),
wobei bei der Zuordnung die von den Transpondern ausgelesenen Fahrzeugreifen-Identifizierungskennzeichen genutzt werden,
e) Zuordnen der einzelnen Reifenmodule (10) zu einer Reifenposition am Fahrzeug (1),
wobei nachfolgend die Signale von einzelnen Reifenmodulen jeweils einer eindeutigen Reifenposition am Fahrzeug (1) zugeordnet werden können,
wobei zwei Empfangsvorrichtungen (5) zum Auslesen von Transpondern (3) bereit gestellt werden,
wobei das Fahrzeug (1) auf beiden Seiten jeweils an einem der Empfangsvorrichtungen (5) vorbei fährt und dabei die einzelnen Transponder (3) an den Fahrzeugreifen (2) ausgelesen werden.

2. Verfahren nach Anspruch 1,
**dadurch gekennzeichnet, dass**
auf einem zentralen Datenspeicher (7) außerhalb des Fahrzeugs (1) von einem Reifenhersteller Fahrzeugreifen-Informationen sowie Fahrzeugreifen-Identifizierungskennzeichen zu den einzelnen Fahrzeugreifen (2) und Informationen zu den einzelnen Reifenmodulen gespeichert sind, wobei bei der Zuordnung der Reifenmodule (10) zu den einzelnen Reifenpositionen diese Informationen genutzt werden.

3. Verfahren nach einem der vorhergehenden Ansprüche,
**dadurch gekennzeichnet, dass**
bei der Erstausrüstung oder Nachrüstung der Fahrzeugreifen (2) mit Reifenmodulen das jeweilige Reifenmodul-Identifizierungskennzeichen einem Fahrzeugreifen-Identifizierungskennzeichen vom Transponder zugeordnet wird.

4. Verfahren nach einem der vorhergehenden Ansprüche,
**dadurch gekennzeichnet, dass**
am Fahrzeug (1) ein Fahrzeug-Transponder (9) angeordnet ist, wobei auf einem Speicher des Fahrzeug-Transponders (9) unterschiedliche Informationen zu Reifenpositionen und Fahrzeugachsen des Fahrzeuges gespeichert sind,
wobei diese Informationen bei der Vorbeifahrt am Empfangsgerät (5) ausgelesen und bei der Zuordnung der Reifenmodule zu den Reifenpositionen genutzt werden.

5. Verfahren nach einem der vorhergehenden Ansprüche,
**dadurch gekennzeichnet, dass**
die ermittelten Reifenpositionen der einzelnen Reifenmodule automatisiert an eine Steuereinheit (4) am Fahrzeug (1) übertragen werden.

6. Verfahren nach einem der vorhergehenden Ansprüche,
**dadurch gekennzeichnet, dass**
die ermittelten Reifenpositionen der einzelnen Reifenmodule automatisiert auf ein Display für den Fahrer übertragen werden.

7. Verfahren nach einem der vorhergehenden Ansprüche,
**dadurch gekennzeichnet, dass**
der Transponder (3,9) einen RFID-Chip umfasst, der in einem Bauteil am Fahrzeugreifen (2) eingebettet ist.

8. Verfahren noch einem der vorhergehenden Ansprüche,
**dadurch gekennzeichnet, dass**
das Verfahren zur Zuordnung der einzelnen Reifenmodule (10) zu einer Reifenposition bei jeder Vorbeifahrt des Fahrzeugs (1) an der Empfangsvorrichtung (5) durchgeführt wird.

## Claims

1. Method for assigning tyre modules to different tyre positions on a vehicle (1), with the following steps:
a) providing a vehicle (1), with vehicle tyres (2),
wherein the vehicle tyres (2) have individual tyre modules (10) for tyre pressure monitoring and in each case a transponder (3), with items of vehicle-tyre information and also a vehicle-tyre identifier,
b) providing at least one receiving device (5) for reading from transponders (3),
c) driving the vehicle (1) past the receiving device (5),
wherein the vehicle-tyre identifiers of the individual transponders (3) on the vehicle tyres are successively received and stored on a data storage device (7),
d) assigning the individual vehicle tyres (2) to individual tyre-module identifiers of the different tyre modules (10),
wherein the vehicle-tyre identifiers read from the transponders are used in the assignment,
e) assigning the individual tyre modules (10) to a tyre position on the vehicle (1),
wherein the signals from individual tyre modules can be successively assigned in each case to a unique tyre position on the vehicle (1), wherein two receiving devices (5) for reading from transponders (3) are provided,
wherein the vehicle (1) drives past one of the receiving devices (5) in each case on both sides and the individual transponders (3) on the vehicle tyres (2) are thereby read.

2. Method according to Claim 1,
**characterized in that**
items of vehicle-tyre information and vehicle-tyre identifiers in relation to the individual vehicle tyres (2) and items of information in relation to the individual tyre modules are stored by a tyre manufacturer on a central data storage device (7) outside the vehicle (1),
wherein these items of information are used in the assignment of the tyre modules (10) to the individual tyre positions.

3. Method according to one of the preceding claims,
**characterized in that**
when the vehicle tyres (2) are fitted with tyre modules for the first time or are retrofitted with tyre modules, the respective tyre-module identifier is assigned by the transponder to a vehicle-tyre identifier.

4. Method according to one of the preceding claims,
**characterized in that**
arranged on the vehicle (1) is a vehicle transponder (9), wherein different items of information in relation to tyre positions and vehicle axles of the vehicle are stored on a storage device of the vehicle transponder (9),
wherein these items of information are read when driving past the receiving device (5) and are used in the assignment of the tyre modules to the tyre positions.

5. Method according to one of the preceding claims,
**characterized in that**
the determined tyre positions of the individual tyre modules are transferred in an automated manner to a control unit (4) on the vehicle (1).

6. Method according to one of the preceding claims,
**characterized in that**
the determined tyre positions of the individual tyre modules are transferred in an automated manner to a display for the driver.

7. Method according to one of the preceding claims,
**characterized in that**
the transponder (3, 9) comprises an RFID chip embedded in a component on the vehicle tyre (2).

8. Method according to one of the preceding claims, **characterized in that**
the method for assigning the individual tyre modules (10) to a tyre position is carried out each time the vehicle (1) drives past the receiving device (5).

## Revendications

1. Procédé pour une association de modules de pneus à différentes positions de pneus sur un véhicule (1), avec les étapes suivantes :
a) la fourniture d'un véhicule (1) avec des pneus de véhicule (2) ;
les pneus de véhicule (2) comportant des modules de pneus (10) individuels pour la surveillance de la pression des pneus ainsi qu'un transpondeur (3) comprenant des informations relatives au pneu du véhicule ainsi qu'un identifiant de pneu de véhicule,
b) la fourniture d'au moins un dispositif de réception (5) pour la lecture de transpondeurs (3) ;
c) le passage du véhicule (1) devant le dispositif de réception (5),
les identifiants de pneus de véhicule étant reçus successivement à partir des différents transpondeurs (3) des pneus du véhicule et étant enregistrés dans une mémoire de données (7),
d) l'association des différents pneus de véhicule (2) aux identifiants de modules de pneus des différents modules de pneus (10),
les identifiants de pneus de véhicule lus à partir des transpondeurs étant utilisés lors de l'association,
e) l'association des différents modules de pneus (10) à une position de pneu sur le véhicule (1),
les signaux provenant des différents modules de pneus pouvant ensuite être associés respectivement à une position de pneu univoque sur le véhicule (1), deux dispositifs de réception (5) pour la lecture de transpondeurs (3) étant fournis,
le véhicule (1) passant de chaque côté devant l'un des dispositifs de réception (5), les différents transpondeurs (3) des pneus de véhicule (2) étant alors lus..

2. Procédé selon la revendication 1,
**caractérisé en ce que**
dans une mémoire de données centrale (7) située en dehors du véhicule (1), des informations relatives aux pneus de véhicule ainsi que des identifiants de pneus de véhicule pour les différents pneus de véhicule (2) et des informations relatives aux différents modules de pneus étant enregistrés par un fabricant de pneus,
ces informations étant utilisées lors de l'association des modules de pneus (10) aux différentes positions de pneus,.

3. Procédé selon l'une des revendications précédentes,
**caractérisé en ce que**
lors de l'équipement initial ou du rééquipement des pneus de véhicule (2) avec des modules de pneus, l'identifiant de module de pneu correspondant est associé à un identifiant de pneu de véhicule provenant du transpondeur.

4. Procédé selon l'une des revendications précédentes,
**caractérisé en ce que**
un transpondeur de véhicule (9) est disposé sur le véhicule (1), des informations relatives aux positions des pneus et aux essieux du véhicule étant stockées dans une mémoire du transpondeur de véhicule (9),
ces informations étant lues lors du passage devant le dispositif de réception (5) et utilisées lors de l'association des modules de pneus aux positions de pneus.

5. Procédé selon l'une des revendications précédentes,
**caractérisé en ce que**
les positions de pneus déterminées des différents modules de pneus sont transmises automatiquement à une unité de commande (4) du véhicule (1).

6. Procédé selon l'une des revendications précédentes,
**caractérisé en ce que**
les positions de pneus déterminées des différents modules de pneus étant transmises automatiquement vers un affichage pour le conducteur.

7. Procédé selon l'une des revendications précédentes,
**caractérisé en ce que**
le transpondeur (3, 9) comprenant une puce RFID, qui est intégrée dans un composant du pneu de véhicule (2).

8. Procédé selon l'une des revendications précédentes, **caractérisé en ce que**
le procédé d'association des différents modules de pneus (10) à une position de pneu est réalisé à chaque passage du véhicule (1) devant le dispositif de réception (5).
